# FASCICULE DE BREVET EUROPEEN

(11) **EP 3 405 835 B1**
(45) Date de publication et mention de la délivrance du brevet: **20.07.2022**
(21) Numéro de dépôt: 17706278.3
(22) Date de dépôt: 20.01.2017
(51) Int. Cl.: G02F 1/35

(54) **DISPOSITIF DE GÉNÉRATION D'UN FAISCEAU DE PHOTONS POLYCHROMATIQUE ET SPATIALEMENT AUTOADAPTÉ**
VORRICHTUNG ZUR ERZEUGUNG EINES POLYCHROMATISCHEN UND RÄUMLICH SELBSTADAPTIERTEN PHOTONENSTRAHLS
DEVICE FOR GENERATING A POLYCHROMATIC AND SPATIALLY SELF-ADAPTED BEAM OF PHOTONS

(30) Priorité: 22.01.2016 FR 1650525
(43) Date de publication de la demande: 28.11.2018
(73) Titulaire: Centre National de la Recherche Scientifique, 75016 Paris (FR); Université de Limoges, 87000 Limoges (FR)
(72) Inventeur: KRUPA, Katarzyna, 25122 Brescia (IT); SHALABY, Badr, 87100 Limoges (FR); LABRUYÈRE, Alexis, 87100 Limoges (FR); TONELLO, Alessandro, 87000 Limoges (FR); COUDERC, Vincent, 87430 Verneuil-sur-Vienne (FR)
(74) Mandataire: Marks & Clerk France
(86) Numéro de dépôt international: PCT/FR2017/050124
(87) Numéro de publication internationale: WO 2017/125691

(56) Documents cités:
- EP-A2- 1 248 143
- WO-A2-02/057846
- US-A- 4 019 159
- US-A- 5 028 816
- US-A1- 2011 147 566
- US-A1- 2012 236 314
- CHI H LEE: "PICOSECOND OPTICS AND MICROWAVE TECHNOLOGY", IEEE TRANSACTIONS ON MICROWAVE THEORY AND TECHNIQUES, IEEE SERVICE CENTER, PISCATAWAY, NJ, US, vol. 38, no. 5, 1 mai 1990 (1990-05-01), pages 596-607, XP000133967, ISSN: 0018-9480, DOI: 10.1109/22.54928
- BARONIO FABIO ET AL: "Second and third order susceptibilities mixing for supercontinuum generation and shaping", OPTICAL FIBER TECHNOLOGY, vol. 18, no. 5, 4 août 2012 (2012-08-04), pages 283-289, XP028944542, ISSN: 1068-5200, DOI: 10.1016/J.YOFTE.2012.07.001

## Description

### Domaine technique

L'invention concerne les dispositifs chargés de générer un faisceau de photons polychromatique, et les systèmes d'analyse qui utilisent de tels dispositifs.

### État de la technique

Comme le sait l'homme de l'art, dans certains domaines, comme par exemple celui de l'analyse d'échantillons (éventuellement médicaux), on a besoin de sources lasers spatialement cohérentes et polychromatiques. De telles sources sont fréquemment appelées continua du fait qu'elles délivrent un faisceau de photons ayant des longueurs d'onde réparties sensiblement continûment sur une largeur spectrale importante, typiquement de quelques dizaines de nanomètres à quelques centaines de nanomètres.

Ces sources sont réalisées à partir d'une interaction lumière-matière mettant en œuvre des effets non linéaires. Elles comprennent généralement au moins une source laser impulsionnelle ou continue (cf. [R1]) délivrant des photons « primaires » présentant une longueur d'onde « primaire », et une fibre optique micro-structurée ou un cristal non linéaire agencé(e) pour produire un faisceau de sortie comprenant des photons secondaires présentant plusieurs longueurs d'onde « secondaires » à partir des photons primaires.

Les sources à fibre optique micro-structurée permettent d'obtenir des rayonnements stables avec une largeur spectrale allant du proche ultraviolet (ou UV) (environ 350 nm) à l'infrarouge moyen (typiquement 5 µm). Les fibres optiques micro-structurées en silice sont par exemple limitées dans l'infrarouge vers 2,4 µm, et ont la particularité de confiner la puissance lumineuse, ce qui augmente l'interaction lumière-matière et améliore la conversion de la longueur d'onde primaire en un grand nombre de longueurs d'onde secondaires. Cependant, les fibres optiques micro-structurées non linéaires ont un faible diamètre de cœur et donc, en présence d'un fort confinement de l'énergie, le seuil de dommage de leur matériau est très vite atteint. De ce fait, ces sources à fibre optique micro-structurée ne permettent pas d'obtenir des énergies de sortie forte. De plus, elles ne permettent pas d'obtenir simultanément des longueurs d'onde appartenant à tout le domaine UV (inférieures à 340 nm) et à tout le domaine infrarouge. Enfin, elles ne permettent pas d'égaliser les vitesses de groupe des photons de longueurs d'onde secondaires différentes, ce qui induit une désynchronisation des photons de longueurs d'onde secondaires différentes dans le temps. Il en résulte une impossibilité d'utiliser ces sources dans certaines applications, comme par exemple la « micro-spectroscopie CARS multiplex (« Coherent AntiStokes Raman Scattering » - diffusion Raman antistokes cohérente multiplex) qui est notamment utilisée dans le domaine de l'imagerie pour identifier et localiser des espèces chimiques spécifiques au sein d'un échantillon.

L'utilisation de cristaux non linéaires à la place des fibres optiques micro-structurées permet d'éviter que le seuil de dommage soit vite atteint. Elle nécessite cependant actuellement que le cristal soit très précisément orienté à l'accord de phase pour que des longueurs d'onde secondaires puissent être obtenues. De ce fait, seules quelques orientations particulières associées à une longueur d'onde primaire particulière permettent d'obtenir un continuum spectral, et encore principalement dans le domaine de l'infrarouge. Il est également connu que des cristaux à mailles centrosymétriques peuvent engendrer des supercontinuums mais en utilisant principalement la non linéarité d'ordre trois (cf. [R2]).

Par ailleurs, le document US 5028816A décrit un oscillateur paramétrique optique utilisant des électrodes permettant d'appliquer un champ électrique au cristal afin de modifier la fréquence centrale du profil spectral du gain. Le dispositif utilise une variation du champ électrique pour induire un rétrécissement du spectre du signal délivré par l'oscillateur. Cependant, le dispositif ne permet pas de générer un supercontinuum.

Le document US 4019159A décrit un dispositif de doublage de fréquence utilisant des électrodes permettant d'appliquer un champ électrique au cristal afin de mieux contrôler les conditions d'accord de phase. Cependant, ce dispositif ne permet pas de générer un super-continuum à partir des photons primaires provenant de la source laser.

Le document EP 1248143 A2 divulgue un dispositif de conversion de fréquence d'un rayonnement monochromatique pompe basé sur la génération de second harmonique dans un cristal KLTN par contrôle du champ électrique dans le cristal afin de réaliser un accord de phase entre le signal et la pompe et par contrôle de l'orientation du cristal. Cependant, ce document ne divulgue pas la génération d'un supercontinuum mais seulement la génération de seconde harmonique.

### Description de l'invention

L'invention a notamment pour but d'améliorer la situation.

Elle propose notamment à cet effet un dispositif tel que décrit dans la revendication 1.

Ce dispositif de génération se caractérise par le fait qu'il comprend également des moyens de contrôle agencés pour générer dans le cristal non linéaire au moins un champ électrique synchrone avec le faisceau d'entrée et propre à induire dans ce dernier un désaccord de phase par un effet électro-optique pour convertir les photons primaires du faisceau d'entrée en des photons secondaires de manière à former un super-continuum.

Ainsi, on peut obtenir un super-continuum de photons dont les longueurs d'onde peuvent aller, selon les besoins, de l'ultraviolet lointain à l'infrarouge lointain, tout en minimisant les variations de vitesse de groupe.

Le dispositif selon l'invention peut comporter d'autres caractéristiques qui peuvent être prises séparément ou en combinaison, et notamment :
- ses moyens de contrôle peuvent être agencés pour générer dans le cristal non linéaire un champ électrique synchrone selon une première direction perpendiculaire à une direction générale des faisceaux d'entrée et de sortie et/ou un autre champ électrique synchrone selon une seconde direction perpendiculaire à la direction générale des faisceaux d'entrée et de sortie et à cette première direction ;
- ses moyens de contrôle peuvent comprendre, d'une première part, des moyens de prélèvement propres à scinder le faisceau d'entrée en une partie principale se dirigeant vers le cristal non linéaire et une partie auxiliaire, d'une deuxième part, des moyens optoélectroniques propres à générer une impulsion électrique à réception de chaque partie auxiliaire du faisceau d'entrée, d'une troisième part, des électrodes placées contre le cristal non linéaire et agencées pour générer dans ce dernier le (chaque) champ électrique à réception de chaque impulsion électrique générée, et, d'une quatrième part, des moyens de retardement agencés pour retarder les photons primaires de la partie principale du faisceau d'entrée de sorte qu'ils parviennent dans le cristal non linéaire de façon synchrone avec le champ électrique généré ;
- le cristal non linéaire peut comprendre, sur des faces d'entrée et de sortie (de faisceau), des miroirs semi-réfléchissants propres à induire une résonnance des photons primaires et/ou des photons secondaires ;
- l'une au moins des électrodes peut comprendre une structuration spatiale propre à induire une modulation spatiale du champ électrique généré dans le cristal non linéaire, propre à provoquer une modification du désaccord de phase et d'un profil spectral du faisceau de sortie et/ou une modification d'une orientation relative d'un vecteur polarisation du faisceau d'entrée par rapport à un axe de conversion des longueurs d'onde ;
- les moyens optoélectroniques peuvent comprendre un générateur de type dit « à ondes gelées » ;
- il peut comprendre au moins deux cristaux non linéaires placés l'un à la suite de l'autre ;
- la source laser impulsionnelle ou continue peut être propre à délivrer des photons primaires présentant une longueur d'onde dite primaire et des photons primaires présentant une autre longueur d'onde égale à la seconde harmonique de cette longueur d'onde primaire. Dans ce cas, le cristal non linéaire peut, par exemple, être de type dit « doubleur de fréquence » pour la longueur d'onde primaire de la source impulsionnelle.

Avantageusement, plusieurs améliorations du dispositif sont possibles et compatibles avec les options mentionnées précédemment, et pouvant être prises séparément ou en combinaison :
- le cristal non linéaire (CN) comprend, un dopage avec des ions terres-rares lui permettant de concilier la génération de photons secondaires avec une amplification des photons primaires et/ou des photons secondaires ;
- la source laser (SL) a la capacité de générer des photons primaire permettant le pompage laser de cristaux à dopage de terre-rare que celle-ci fonctionne en régime impulsionnel ou en régime continu ;
- le cristal non linéaire (CN) peut posséder une non linéarité du second et/ou du troisième ordre ;
- le cristal non linéaire (CN) peut être du type céramique transparente et/ou vitrocéramique transparente ;
- le cristal non linéaire (CN) peut avoir un agencement moléculaire de type Centrosymétrique ou non centrosymétrique ; ou encore
- le cristal non linéaire (CN) peut être dopé avec des ions de type Ytterbium, Erbium, Thulium, Holmium, Néodyme, Praséodyme, ou encore Cérium, utilisés seuls ou en combinaison.

L'invention propose également un système d'analyse d'échantillon comprenant au moins un dispositif de génération du type de celui présenté ci-avant et propre à fournir un faisceau de sortie polychromatique pour analyser l'échantillon.

Par exemple, un tel système peut être propre à effectuer une analyse de l'échantillon par diffusion Raman antistokes cohérente multiplex (ou CARS (« Coherent AntiStokes Raman Scattering »)).

### Brève description des figures

L'invention sera mieux comprise à la lecture de la description qui suit, faite uniquement à titre d'exemple, et en référence aux figures en annexe dans lesquelles :
- La figure 1 illustre de façon schématique et fonctionnelle un premier exemple de réalisation d'un dispositif de génération selon l'invention ; et
- la figure 2 illustre de façon schématique et fonctionnelle un second exemple de réalisation d'un dispositif de génération selon l'invention.

### Modes de réalisation

L'invention a notamment pour but de proposer un dispositif DG destiné à générer un faisceau de photons FS polychromatique.

Dans ce qui suit, on considère à titre d'exemple non limitatif que le dispositif de génération DG est destiné à faire partie d'un système d'analyse d'échantillon (éventuellement de type médical). Mais l'invention n'est pas limitée à ce type de système. En effet, elle concerne tout système devant comprendre au moins un dispositif pouvant générer un faisceau de photons polychromatique.

Par ailleurs, on considère dans ce qui suit, à titre d'exemple non limitatif, que le système d'analyse est propre à effectuer des analyses d'échantillons par diffusion Raman antistokes cohérente multiplex (ou CARS (« Coherent AntiStokes Raman Scattering »)). Mais l'invention n'est pas limitée à ce type d'analyse.

D'une manière générale, l'invention concerne de nombreux domaines, et notamment la biophotonique (et en particulier le diagnostic cellulaire), l'imagerie non linéaire multimodale, l'opto-génétique, la tomographie cohérente, les lidars, la cytométrie en flux, le dépistage d'éléments chimiques à distance (par exemple pour la sécurité aérienne), le contrôle de personnes (par exemple dans le domaine médical), la détection d'explosifs et la détection de bactéries.

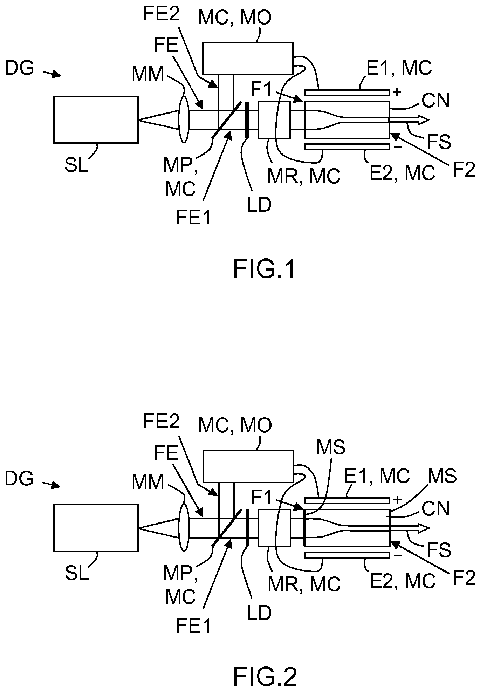

On a schématiquement représenté sur les figures 1 et 2 deux exemples de réalisation non limitatifs d'un dispositif de génération DG selon l'invention.

Comme illustré, un dispositif (de génération) DG comprend au moins une source laser impulsionnelle SL, des moyens de mise en forme MM, au moins un cristal non linéaire CN, et des moyens de contrôle MC.

La source laser impulsionnelle (ou laser de pompe) SL est propre à délivrer des photons dits « primaires » qui présentent au moins une longueur d'onde ci-après dite « primaire ». Cette longueur d'onde primaire (ou de pompe) est choisie en fonction des besoins applicatifs, et donc de la bande spectrale désirée. Par conséquent, elle pourra appartenir au domaine de l'infrarouge (ou IR), du visible ou de l'ultraviolet (ou UV). Ces photons primaires peuvent également appartenir à plusieurs domaines comme par exemple une longueur d'onde infrarouge et sa seconde harmonique.

Par exemple, cette source laser impulsionnelle SL peut offrir une forte puissance crête. Dans ce cas, il pourra s'agir, par exemple, d'un laser de type Nd : YAG produisant des photons de 1064 nm avec des impulsions allant de 10 ps à 2 ns.

Les moyens de mise en forme MM sont propres à agir sur les photons primaires pour délivrer un faisceau d'entrée FE. Par exemple, et comme illustré, ces moyens de mise en forme MM peuvent comprendre au moins une lentille installée en aval de la source laser impulsionnelle SL par rapport au sens de propagation des photons primaires.

On notera que dans les exemples non limitatifs illustrés sur les figures 1 et 2, les moyens de mise en forme MM sont agencés pour délivrer en sortie un faisceau d'entrée FE non divergent durant la traversée du cristal CN (c'est-à-dire dans lequel les photons de chaque impulsion se propagent sensiblement parallèlement les uns aux autres suivant une direction générale).

Le cristal non linéaire CN est agencé pour produire un faisceau de sortie polychromatique FS comprenant des photons dits « secondaires » présentant plusieurs longueurs d'onde à partir du faisceau d'entrée FE. Cette non linéarité est de préférence quadratique.

On notera que le cristal non linéaire CN est choisi en fonction des besoins applicatifs, et donc de la bande spectrale désirée et de la longueur d'onde primaire (ou de pompe). A titre d'exemple, en présence d'un laser de type Nd : YAG produisant des photons de 1064 nm **avec** des impulsions de 30 ps, on peut, par exemple, utiliser un cristal non linéaire CN de type PPLN (« Periodically Poled Lithium Niobate ») massif, fabriqué pour générer la seconde harmonique du rayonnement de la source laser impulsionnelle SL (ou SHG (« Second Harmonic Génération »)) et pour un fonctionnement aux environs de 50°C, et présentant une longueur de 15 mm et un QPM (« Quasi-Phase Matching » - quasi-accord de phase (c'est-à-dire une inversion périodique des domaines ferroélectriques permettant d'obtenir une quasi égalité des vitesses de phase entre l'onde fondamentale (par exemple à 1064 nm) et l'onde à la seconde harmonique (par exemple 532 nm))) égal à 6,75 µm. On notera que le pas du QPM dépend de la température. Ainsi, on peut avoir, par exemple, un pas de 6,54 µm à 160°C.

Mais d'autres cristaux non linéaires CN peuvent être utilisés, comme par exemple le KTP (« Potassium titanyl phosphate »), ou le PPKTP (« Periodically Poled KTP »), ou le triborate de lithium (LiB₃O₅ - ou LBO), ou encore le BBO (« Beta Barium Borate »).

Les moyens de contrôle MC sont agencés pour générer dans le cristal non linéaire CN au moins un champ électrique qui est synchrone avec le faisceau d'entrée FE et propre à induire dans ce dernier (CN) un désaccord de phase par un effet électro-optique. Ce désaccord de phase est propre à provoquer la conversion des photons primaires du faisceau d'entrée FE en des photons secondaires ayant des longueurs d'onde appartenant à un super-continuum.

En fait, l'effet électro-optique provoque une modification de l'indice du matériau constituant le cristal non linéaire CN, ce qui change les conditions de désaccord de phase entre les photons primaires et les photons secondaires, ce qui module le profil spectral des photons secondaires sortants.

L'axe de propagation des longueurs d'onde primaires et secondaires est quasi-perpendiculaire à la direction du champ électrique induisant l'effet électro-optique.

Les conditions de propagation dans le cristal non linéaire CN sont ajustées par la direction de coupe initiale du cristal CN ainsi que par l'effet électro-optique, afin d'obtenir un désaccord de phase qui favorise la génération des photons secondaires. Cette génération de photons secondaires est réalisée en régime de très forte intensité (des photons primaires), ce qui se traduit simultanément par une modification du profil spatial du faisceau d'entrée FE lors de la conversion de fréquence. Cette modification du profilage simultanément dans le domaine spatial et le domaine temporel peut consister soit en une augmentation du confinement qui se traduit par une réduction du diamètre du faisceau d'entrée FE, comme cela est schématiquement matérialisé dans les cristaux non linéaires CN des figures 1 et 2, soit en une réduction du confinement qui se traduit par une augmentation du diamètre du faisceau d'entrée FE. La première alternative, appelée « propagation auto-focalisée adiabatique », permet d'atteindre plus facilement la conversion large bande dans le cristal non linéaire CN. La seconde alternative, appelée « propagation défocalisante », permet de protéger le cristal non linéaire CN de tout dommage optique lors d'excitations très énergétiques avec le faisceau d'entrée FE (effet de transparent saturable intégré à la propagation non linéaire).

L'effet de transparence saturable se traduit par une limitation de la densité de puissance en sortie (la densité de puissance est égale au rapport entre la puissance et la surface du faisceau). Il est alors possible d'obtenir cet effet si l'augmentation de la puissance s'accompagne d'une augmentation de la surface illuminée par le faisceau (c'est le cas lors d'une défocalisation induite par la puissance du faisceau primaire).

Comme illustré sur les figures 1 et 2, les moyens de contrôle MC sont agencés pour générer dans le cristal non linéaire CN un premier champ électrique synchrone selon une première direction perpendiculaire à la direction générale du faisceau d'entrée FE et du faisceau de sortie FS et/ou un second champ électrique synchrone selon une seconde direction perpendiculaire à la direction générale du faisceau d'entrée FE et du faisceau de sortie FS et à cette première direction. Il est alors possible de modifier l'indice du matériau de manières différentes dans les deux directions perpendiculaires à celle de la propagation des faisceaux. Cela permet d'obtenir un choix plus large de désaccords de phase. Mais un point de désaccord de phase nul peut être également utilisé. On reviendra plus loin sur ces différentes options pouvant être mises en œuvre.

Également comme illustré sur les figures 1 et 2, les moyens de contrôle MC peuvent comprendre au moins des moyens de prélèvement MP, des moyens optoélectroniques MO, des électrodes Ej, et des moyens de retardement MR.

Les moyens de prélèvement MP sont installés entre la source laser impulsionnelle SL et le cristal non linéaire CN. Ils sont propres à scinder le faisceau d'entrée FE en une partie principale FE1 dirigée vers le cristal non linéaire CN et une partie auxiliaire FE2 dirigée vers les moyens optoélectroniques MO.

Par exemple, et comme illustré non limitativement, ces moyens de prélèvement MP peuvent comprendre une lame semi-réfléchissante inclinée, par exemple à 45°, par rapport à un plan perpendiculaire à la direction générale du faisceau d'entrée FE.

Les moyens optoélectroniques MO sont propres à générer une impulsion électrique à réception de chaque partie auxiliaire FE1 du faisceau d'entrée. Chaque impulsion électrique, synchrone avec l'impulsion optique (photons primaires de FE1) qui l'engendre et destinée aux électrodes Ej, est de préférence haute tension. Les moyens optoélectroniques MO peuvent, par exemple, être agencés sous la forme d'un générateur dit « à ondes gelées », lequel peut générer des impulsions électriques d'une intensité supérieure au kilovolt et avec un profil de type monopolaire ou bipolaire (typiquement de 1 ns à 3 ns de durée). Le profil bipolaire permet de passer rapidement d'une direction de polarisation du cristal CN à une direction inverse favorisant la modification ultrarapide de l'accord de phase en temps réel.

Les électrodes Ej sont placées contre le cristal non linéaire CN et sont agencées pour générer dans ce dernier (CN) le (chaque) champ électrique à réception de chaque impulsion électrique générée par les moyens optoélectroniques MO. L'introduction d'un liquide ou d'une pâte conductrice entre l'électrode Ej et le cristal CN favorise la mise en place du champ électrique dans le cristal CN. Cette pâte conductrice peut, par exemple, être une colle conductrice telle qu'une résine à l'argent.

On comprendra que pour générer le premier champ électrique évoqué plus haut, on utilise deux électrodes Ej (ici j = 1 ou 2) placées contre deux premières faces opposées du cristal non linéaire CN, et pour générer le second champ électrique évoqué plus haut, on utilise deux électrodes Ej placées contre deux secondes faces opposées du cristal non linéaire CN, perpendiculaires aux premières faces. Ces premières et secondes faces sont parallèles à la direction générale des faisceaux d'entrée FE et de sortie FS, et perpendiculaires à la face d'entrée F1 du cristal non linéaire CN par laquelle pénètre le faisceau d'entrée FE et à la face de sortie F2 du cristal non linéaire CN par laquelle sort le faisceau de sortie FS. Lorsque l'on veut générer à la fois le premier champ électrique et le second champ électrique, on utilise deux électrodes Ej placées contre deux premières faces opposées du cristal non linéaire CN, et deux autres électrodes Ej' placées contre deux secondes faces opposées du cristal non linéaire CN, perpendiculaires aux premières faces. Dans cette dernière alternative, les moyens optoélectroniques MO génèrent soit deux impulsions électriques à réception de chaque partie auxiliaire FE2 du faisceau d'entrée, et transmettent de façon synchrone ces deux impulsions électriques aux deux paires d'électrodes Ej afin qu'elles créent deux champs électriques destinés à induire deux désaccords de phase selon deux directions perpendiculaires, soit une unique impulsion électrique à réception de chaque partie auxiliaire FE2 du faisceau d'entrée, et transmettent cette unique impulsion électrique à la paire d'électrodes Ej concernée afin qu'elle crée un champ électrique destiné à induire un désaccord de phase selon une direction.

Les moyens de retardement MR sont agencés pour retarder les photons primaires de la partie principale FE1 du faisceau d'entrée FE de sorte qu'ils parviennent dans le cristal non linéaire CN de façon synchrone avec le (chaque) champ électrique généré. Par exemple, ces moyens de retardement MR peuvent être agencés sous la forme d'une ligne à retard qui permet de synchroniser chaque impulsion optique (photons primaires) qui parvient dans le cristal non linéaire CN avec l'impulsion électrique correspondante engendrée par les moyens optoélectroniques MO.

On notera, comme illustré non limitativement dans le second exemple de la figure 2, que le cristal non linéaire CN peut éventuellement comprendre, sur ses faces d'entrée F1 et de sortie F2, des miroirs semi-réfléchissants MS propres à induire une résonnance des photons primaires et/ou des photons secondaires. Cette option est destinée à faciliter la génération d'un spectre large dans le cristal non linéaire CN grâce à l'effet électro-optique. Cette résonnance a pour effet d'augmenter l'efficacité de conversion en multipliant le nombre de passages dans le cristal CN (l'intensité du faisceau converti étant en effet proportionnelle à la longueur au carré du milieu non linéaire traversé). Ces miroirs semi-réfléchissants MS peuvent être soit des éléments rapportés, soit définis par un traitement de surface, par exemple diélectrique.

On notera également, bien que cela n'apparaisse pas sur les figures 1 et 2, que l'une au moins des électrodes Ej peut comprendre une structuration spatiale propre à induire une modulation spatiale du champ électrique généré dans le cristal non linéaire CN. Cette modulation spatiale est propre à provoquer une modification du désaccord de phase et du profil spectral du faisceau de sortie FS et/ou une modification de l'orientation relative du vecteur polarisation du faisceau d'entrée FE1 par rapport à l'axe de conversion des longueurs d'onde. Ce vecteur polarisation du faisceau d'entrée FE1 peut, comme illustré sur les figures 1 et 2, être orienté par une lame demi-onde (ou λ/2) LD, ou bien être modifié par une lame quart d'onde (ou λ/4).

On comprendra qu'en présence d'une telle structuration (ou inhomogénéité) spatiale le champ électrique devient non uniforme, ce qui permet de contrôler la conversion non linéaire large bande tout au long de la propagation dans le cristal non linéaire CN. Ainsi, le champ électrique peut, par exemple, être plus fort au voisinage de la face d'entrée F1 qu'au voisinage de la face de sortie F2. On notera que cette structuration peut être éventuellement périodique pour contrôler le désaccord de phase en jouant sur la vitesse des photons primaires et secondaires.

On notera également, bien que cela n'apparaisse pas sur les figures 1 et 2, que le dispositif DG peut éventuellement comprendre au moins deux cristaux non linéaires CN placés l'un à la suite de l'autre. Dans ce cas, chaque cristal est découpé suivant une direction particulière. Cela permet de changer de manière importante l'accord de phase pour obtenir une conversion plus large des photons primaires (ce que ne peut pas faire la polarisation des électrodes Ej qui a un effet plus limité sur l'accord de phase).

On notera également que la source laser impulsionnelle SL peut être éventuellement propre à délivrer des photons primaires qui présentent la longueur d'onde primaire (ou fondamentale) et des photons primaires présentant une autre longueur d'onde égale à la seconde harmonique de la longueur d'onde primaire. Dans ce cas, le cristal non linéaire CN peut être de type dit « doubleur de fréquence » pour les photons primaires. Il est alors pompé simultanément par des photons de deux longueurs d'onde différentes, ce qui permet d'augmenter le nombre de longueurs d'onde des photons secondaires du super-continuum.

La génération de supercontinuum dans les cristaux est réalisée grâce à la puissance de l'onde de pompe qui transfert son énergie vers d'autres longueurs d'onde. Une meilleure génération peut alors être obtenue si les photons primaires sont réamplifiés lors de leur passage dans le cristal. La déplétion des photons primaires, due aux conversions de fréquences, est compensée par une amplification laser. Les photons secondaires peuvent aussi être amplifiés pour obtenir plus de puissance en sortie.

Cette amplification peut être réalisée par l'ajout (ou dopage) d'un ou plusieurs ions terres-rares dans le cristal et par leur pompage par une ou plusieurs ondes de pompe en régime continu ou pulsé. Ce genre de processus l'amplification a par exemple été publié dans des fibres optiques (cf. [R3]).

De plus, les cristaux non linéaires sont généralement obtenus par un procédé de croissance cristalline par exemple de type « Czochralski » (cf. [R4] et [R5]). Après croissance, les cristaux sont redécoupés avec une orientation particulière et peuvent servir dans des expériences de sources lasers et/ou de conversions non linéaires.

Il est également connu que ces mêmes cristaux peuvent être obtenus par un procédé de fabrication reposant sur une agglomération de microcristaux sous forme de poudre. Après agglomération, le cru est consolidé par un pressage à très haute température (on parle de frittage). Un cristal composé de microcristaux (une céramique) est alors obtenu et peut être aussi transparent que son homologue obtenu par voie de croissance (cf. [R6]). Pour des conditions de températures de frittage particulières, plusieurs phases peuvent apparaitre dans le matériau. Le cristal est alors englobé dans une phase vitreuse. On parle alors de vitrocéramique c'est-à-dire d'un matériel qui possède localement une phase vitreuse prêt d'une phase cristalline (cf. [R7]).

Ainsi plusieurs améliorations du dispositif sont possibles et compatibles avec les précédentes options mentionnées :
- le cristal non linéaire (CN) peut comprendre, un dopage avec des ions terres-rares lui permettant de concilier la génération de photons secondaires avec une amplification des photons primaires et/ou des photons secondaires ;
- la source laser (SL) a la capacité de générer des photons primaire permettant le pompage laser de cristaux à dopage de terre-rare que celle-ci fonctionne en régime impulsionnel ou en régime continu ;
- le cristal non linéaire (CN) peut posséder une non linéarité du second et/ou du troisième ordre ;
- le cristal non linéaire (CN) peut être du type céramique transparente et/ou vitrocéramique transparente ;
- le cristal non linéaire (CN) peut avoir un agencement moléculaire de type Centrosymétrique ou non centrosymétrique ; ou encore
- le cristal non linéaire (CN) peut être dopé avec des ions de types Ytterbium, Erbium, Thulium, Holmium, Néodyme, Praséodyme, ou encore Cérium, utilisés seuls ou en combinaison.

L'invention offre plusieurs avantages, parmi lesquels :
- elle permet d'obtenir un super-continuum avec une forte densité spectrale de puissance du fait que la section transverse du cristal non linéaire est beaucoup plus importante que la section transverse d'un cœur de fibre optique,
- elle permet de minimiser la séparation temporelle entre les photons primaires et les photons secondaires après passage dans un cristal non linéaire de faible longueur, et ainsi d'obtenir un rayonnement polychromatique plus cohérent,
- elle permet d'obtenir des photons ayant des longueurs d'onde allant de l'ultraviolet lointain à l'infrarouge lointain, grâce aux importants domaines de transparence des cristaux non linéaires,
- elle permet d'adapter le profil spectral des photons secondaires et de régler la densité spectrale de puissance en fonction de l'énergie de la source laser impulsionnelle disponible, grâce à la modification des paramètres de propagation dans le cristal non linéaire résultant de l'excitation électrique contrôlée spatialement et temporellement.

L'invention a été illustrée et décrite en détail dans les dessins et la description précédente. Celle-ci doit être considérée comme illustrative et donnée à titre d'exemple et non comme limitant l'invention a cette seule description. De nombreuses variantes de réalisation sont possibles.

### LISTE DES RÉFÉRENCES

[R1] Mussot, A.; Kudlinski, A.; Kolobov, M.; Louvergneaux, E.; Douay, M.; Taki, M.; " Observation of extreme temporal events in CW-pumped supercontinuum Optics Express 17(19) 17010-7015 (2009)
[R2] F. Silva, D.R. Austin, A. Thai, M. Baudisch, M. Hemmer, D. Faccio, A. Couairon & J. Biegert; "Multi-octave supercontinuum generation from mid-infrared filamentation in a bulk crysta" nature communications | 3:807 | DOI: 10.1038
[R3] Roy, Aude; Leproux, Philippe; Roy, Philippe; Auguste, Jean-Louis; Couderc, Vincent, "Supercontinuum generation in a nonlinear Yb-doped, double-clad, microstructured fiber" Journal of the Optical Society of America B 24(4) 788-791(2007)
[R4] M. Spiesser, Jan Czochralski « Méthode de tirage des cristaux », Bulletin GFCC (Mai 1999)
[R5] J. Czochralski, Z. Physik Chem. 92 (1918) 219
[R6] Garanin, S. G.; Rukavishnikov, N. N.; Dmitryuk, A. V.; Zhilin, A. A.; Mikhailov, M. D. Laser ceramic. 1. Production methods Journal of Optical Technology 77(9) 565-576 (2010)
[R7] Chen, Xiaobo; Song, Zengfu; Hu, Lili; Zhang, Junjie; Wen, Lei, « Experimental study on a nonlinear photonics process of Er(0.5)Yb(3):FOV oxyfluoride nanophase vitroceramics » ; Optics Letters 32(14) 2019-2021 (2007)

## Revendications

1. Dispositif (DG) de génération d'un faisceau de photons polychromatique, ledit dispositif (DG) comprenant une source laser (SL) impulsionnelle propre à délivrer des photons primaires présentant au moins une longueur d'onde, des moyens de mise en forme (MM) propres à agir sur lesdits photons primaires pour délivrer un faisceau d'entrée, et un cristal non linéaire (CN) agencé pour produire un faisceau de sortie polychromatique comprenant des photons secondaires présentant plusieurs longueurs d'onde à partir dudit faisceau d'entrée, **caractérisé en ce qu'**il comprend en outre des moyens de contrôle (MC) agencés pour générer dans ledit cristal non linéaire (CN) au moins un champ électrique synchrone avec ledit faisceau d'entrée et propre à induire dans ce dernier (CN) un désaccord de phase par un effet électro-optique pour convertir lesdits photons primaires du faisceau d'entrée en lesdits photons secondaires de manière à former un super-continuum, lesdits moyens de contrôle (MC) comprenant
i. des moyens de prélèvement (MP) propres à scinder ledit faisceau d'entrée en une partie principale se dirigeant vers ledit cristal non linéaire (CN) et une partie auxiliaire,
ii. des moyens optoélectroniques (MO) propres à générer une impulsion électrique à réception de chaque partie auxiliaire dudit faisceau d'entrée,
iii. des électrodes (Ej) placées contre ledit cristal non linéaire (CN) et agencées pour générer dans ce dernier (CN) ledit champ électrique à réception de chaque impulsion électrique générée, et
iv. des moyens de retardement (MR) agencés pour retarder lesdits photons primaires de ladite partie principale du faisceau d'entrée de sorte qu'ils parviennent dans ledit cristal non linéaire (CN) de façon synchrone avec ledit champ électrique généré.

2. Dispositif selon la revendication 1, **caractérisé en ce que** lesdits moyens de contrôle (MC) sont agencés pour générer dans ledit cristal non linéaire (CN) un champ électrique synchrone selon une première direction perpendiculaire à une direction générale desdits faisceaux d'entrée et de sortie et/ou un autre champ électrique synchrone selon une seconde direction perpendiculaire à une direction générale desdits faisceaux d'entrée et de sortie et à ladite première direction.

3. Dispositif selon l'une des revendications 1 et 2, **caractérisé en ce que** ledit cristal non linéaire (CN) comprend, sur des faces d'entrée (F1) et de sortie (F2), des miroirs semi-réfléchissants (MS) propres à induire une résonnance desdits photons primaires et/ou desdits photons secondaires.

4. Dispositif selon l'une quelconque des revendications précédentes, **caractérisé en ce que** l'une au moins desdites électrodes (Ej) comprend une structuration spatiale propre à induire une modulation spatiale dudit champ électrique généré dans ledit cristal non linéaire (CN), propre à provoquer une modification dudit désaccord de phase et d'un profil spectral dudit faisceau de sortie et/ou une modification d'une orientation relative d'un vecteur polarisation dudit faisceau d'entrée par rapport à un axe de conversion des longueurs d'onde.

5. Dispositif selon l'une des revendications 1 à 4, **caractérisé en ce que** lesdits moyens optoélectroniques (MO) comprennent un générateur de type dit « à ondes gelées ».

6. Dispositif selon l'une des revendications 1 à 5, **caractérisé en ce qu'**il comprend au moins deux cristaux non linéaires (CN) placés l'un à la suite de l'autre.

7. Dispositif selon l'une des revendications 1 à 6, **caractérisé en ce que** ladite source laser (SL) est propre à délivrer des photons primaires présentant une longueur d'onde dite primaire et des photons primaires présentant une autre longueur d'onde égale à une seconde harmonique de ladite longueur d'onde primaire, et **en ce que** ledit cristal non linéaire (CN) est de type dit « doubleur de fréquence » pour ladite longueur d'onde primaire.

8. Dispositif selon l'une des revendications 1 à 7, **caractérisé en ce que** ledit cristal non linéaire (CN) comprend, un dopage avec des ions terres-rares lui permettant de concilier la génération de photons secondaires avec une amplification des photons primaires et/ou des photons secondaires.

9. Dispositif selon la revendication 8, **caractérisé en ce que** la source laser utilisée a la capacité de générer des photons primaires permettant le pompage laser de cristaux à dopage de terre-rare.

10. Dispositif selon l'une des revendications 1 à 9, **caractérisé en ce que** ledit cristal non linéaire (CN) possède une non linéarité du second et/ou du troisième ordre.

11. Dispositif selon l'une des revendications 1 à 10, **caractérisé en ce que** ledit cristal non linéaire est du type céramique transparente et/ou vitrocéramique transparente.

12. Dispositif selon l'une des revendications 1 à 11, **caractérisé en ce que** ledit cristal non linéaire a un agencement moléculaire de type Centro symétrique.

13. Dispositif selon l'une des revendications 1 à 12, **caractérisé en ce que** ledit cristal non linéaire est dopé avec des ions de type Ytterbium, Erbium, Thulium, Holmium, Néodyme, Praséodyme, ou Cérium, utilisés seuls ou en combinaison.

14. Système d'analyse d'échantillon, **caractérisé en ce qu'**il comprend au moins un dispositif de génération (DG) selon l'une des revendications précédentes, propre à fournir un faisceau de sortie polychromatique pour analyser ledit échantillon.

15. Système selon la revendication 14, **caractérisé en ce qu'**il est propre à effectuer une analyse dudit échantillon par diffusion Raman antistokes cohérente multiplex.

## Patentansprüche

1. Vorrichtung (DG) zum Erzeugen eines mehrfarbigen Photonenstrahls, wobei die Vorrichtung (DG) eine Impulslaserquelle (SL), die in der Lage ist, primäre Photonen zu liefern, die mindestens eine Wellenlänge aufweisen, Formungsmittel (MM), die in der Lage sind, auf die primären Photonen einzuwirken, um einen Eingangsstrahl zu liefern, und einen nichtlinearen Kristall (CN) umfasst, der angeordnet ist, um aus dem Eingangsstrahl einen mehrfarbigen Ausgangsstrahl zu erzeugen, der sekundäre Photonen umfasst, die mehrere Wellenlängen aufweisen, **dadurch gekennzeichnet, dass** sie des Weiteren Steuermittel (MC) umfasst, die angeordnet sind, um in dem nichtlinearen Kristall (CN) mindestens ein elektrisches Feld zu erzeugen, das mit dem Eingangsstrahl synchron ist und in der Lage ist, in diesem (CN) durch einen elektrooptischen Effekt eine Phasenverstimmung zu induzieren, um die primären Photonen des Eingangsstrahls in die sekundären Photonen umzuwandeln, um ein Superkontinuum zu bilden, wobei die Steuermittel (MC) Folgendes umfassen:
i. Abgriffmittel (MP), die in der Lage sind, den Eingangsstrahl in einen Hauptteil, der sich zum nichtlinearen Kristall (CN) richtet, und einen zusätzlichen Teil zu spalten,
ii. optoelektronische Mittel (MO), die in der Lage sind, bei Empfang eines jeden zusätzlichen Teils des Eingangsstrahls einen elektrischen Impuls zu erzeugen,
iii. Elektroden (Ej), die an den nichtlinearen Kristall (CN) angelegt und angeordnet sind, um in diesem (CN) bei Empfang eines jeden erzeugten elektrischen Impulses das elektrische Feld zu erzeugen, und
iv. Verzögerungsmittel (MR), die angeordnet sind, um die primären Photonen des Hauptteils des Eingangsstrahls derart zu verzögern, dass sie synchron mit dem erzeugten elektrischen Feld in den nichtlinearen Kristall (CN) gelangen.

2. Vorrichtung nach Anspruch 1, **dadurch gekennzeichnet, dass** die Steuermittel (MC) angeordnet sind, um in dem nichtlinearen Kristall (CN) ein synchrones elektrisches Feld entlang einer ersten Richtung, die zu einer allgemeinen Richtung des Eingangsstrahls und des Ausgangsstrahls senkrecht ist, und/oder ein weiteres synchrones elektrisches Feld entlang einer zweiten Richtung, die zu einer allgemeinen Richtung des Eingangsstrahls und des Ausgangsstrahls und zu der ersten Richtung senkrecht ist, zu erzeugen.

3. Vorrichtung nach einem der Ansprüche 1 und 2, **dadurch gekennzeichnet, dass** der nichtlineare Kristall (CN) auf Eingangsflächen (F1) und Ausgangsflächen (F2) halbreflektierende Spiegel (MS) umfasst, die in der Lage sind, eine Resonanz der primären Photonen und/oder der sekundären Photonen zu induzieren.

4. Vorrichtung nach einem der vorhergehenden Ansprüche, **dadurch gekennzeichnet, dass** mindestens eine der Elektroden (Ej) eine räumliche Struktur umfasst, die in der Lage ist, eine räumliche Modulation des erzeugten elektrischen Feldes, das in dem nichtlinearen Kristall (CN) erzeugt wird, zu induzieren, in der Lage ist, eine Modifikation der Phasenverstimmung und eines Spektralprofils des Ausgangsstrahls und/oder eine Modifikation einer relativen Ausrichtung eines Polarisierungsvektors des Eingangsstrahls in Bezug auf eine Umwandlungsachse der Wellenlängen hervorzurufen.

5. Vorrichtung nach einem der Ansprüche 1 bis 4, **dadurch gekennzeichnet, dass** die optoelektronischen Mittel (MO) einen Generator vom als "Generator mit eingefrorenen Wellen" bezeichneten Typ umfassen.

6. Vorrichtung nach einem der Ansprüche 1 bis 5, **dadurch gekennzeichnet, dass** sie mindestens zwei nichtlineare Kristalle (CN) umfasst, die hintereinander platziert sind.

7. Vorrichtung nach einem der Ansprüche 1 bis 6, **dadurch gekennzeichnet, dass** die Laserquelle (SL) in der Lage ist, primäre Photonen zu liefern, die eine als primär bezeichnete Wellenlänge aufweisen, und primäre Photonen zu liefern, die eine andere Wellenlänge gleich einer zweiten Harmonischen der primären Wellenlänge aufweisen, und dass der nichtlineare Kristall (CN) vom als "Frequenzdoppler" bezeichneten Typ für die primäre Wellenlänge ist.

8. Vorrichtung nach einem der Ansprüche 1 bis 7, **dadurch gekennzeichnet, dass** der nichtlineare Kristall (CN) eine Dotierung mit Seltenerdionen umfasst, die es ihm ermöglicht, die Erzeugung von sekundären Photonen mit einer Verstärkung von primären Photonen und/oder sekundären Photonen zu kombinieren.

9. Vorrichtung nach Anspruch 8, **dadurch gekennzeichnet, dass** die verwendete Laserquelle die Fähigkeit hat, primäre Photonen zu erzeugen, was das Laserpumpen von Kristallen mit Seltenerddotierung ermöglicht.

10. Vorrichtung nach einem der Ansprüche 1 bis 9, **dadurch gekennzeichnet, dass** der nichtlineare Kristall (CN) eine Nichtlinearität der zweiten und/oder dritten Ordnung besitzt.

11. Vorrichtung nach einem der Ansprüche 1 bis 10, **dadurch gekennzeichnet, dass** der nichtlineare Kristall vom keramischen transparenten und/oder glaskeramischen transparenten Typ ist.

12. Vorrichtung nach einem der Ansprüche 1 bis 11, **dadurch gekennzeichnet, dass** der nichtlineare Kristall eine molekulare Anordnung vom zentralsymmetrischen Typ aufweist.

13. Vorrichtung nach einem der Ansprüche 1 bis 12, **dadurch gekennzeichnet, dass** der nichtlineare Kristall mit Ionen vom Typ Ytterbium, Erbium, Thulium, Holmium, Neodym, Praseodym oder Cerium dotiert ist, die alleine oder in Kombination verwendet werden.

14. System zur Probenanalyse, **dadurch gekennzeichnet, dass** es mindestens eine Vorrichtung zum Erzeugen (DG) nach einem der vorhergehenden Ansprüche umfasst, die in der Lage ist, einen mehrfarbigen Ausgangsstrahl zu liefern, um die Probe zu analysieren.

15. System nach Anspruch 14, **dadurch gekennzeichnet, dass** es in der Lage ist, eine Analyse der Probe durch multiplexe kohärente Anti-Stokes-Raman-Streuung zu bewirken.

## Claims

1. A device (DG) for generating a polychromatic beam of photons, said device (DG) comprising a pulsed laser source (SL) that is able to deliver primary photons having at least one wavelength, forming means (MM) able to act on the primary photons to deliver an input beam, and a nonlinear crystal (CN) that is arranged to produce, from the input beam, a polychromatic output beam comprising secondary photons having several wavelengths, **characterised in that** it further comprises control means (MC) arranged to generate, in the nonlinear crystal (CN), at least one electric field that is synchronous with the input beam and able to induce, in the latter (CN), a phase mismatch via an electro-optical effect in order to convert the primary photons of the input beam into said secondary photons so as to form a super-continuum, said control means (MC) comprising:
i. sampling means (MP) able to split the input beam into a main portion that is directed toward the nonlinear crystal (CN) and an auxiliary portion,
ii. optoelectronic means (MO) able to generate an electric pulse on reception of each auxiliary portion of the input beam,
iii. electrodes (Ej) that are placed against the nonlinear crystal (CN) and that are arranged to generate, in the latter (CN), the electric field on reception of each generated electric pulse, and
iv. delaying means (MR) arranged to delay the primary photons of the main portion of the input beam so that they enter the nonlinear crystal (CN) synchronously with the generated electric field.

2. The device according to claim 1, **characterised in that** the control means (MC) are arranged to generate, in the nonlinear crystal (CN), a synchronous electric field in a first direction that is perpendicular to a general direction of the input and output beams and/or another synchronous electric field in a second direction that is perpendicular to a general direction of the input and output beams and to the first direction.

3. The device according to one of claims 1 and 2, **characterised in that** the nonlinear crystal (CN) comprises, on input (F1) and output faces (F2), semi-reflective mirrors (MS) that are able to induce a resonance of the primary photons and/or of the secondary photons.

4. The device according to any of the preceding claims, **characterised in that** at least one of the electrodes (Ej) comprises a spatial structure that is able to induce a spatial modulation of the electric field generated in the nonlinear crystal (CN), able to provoke a modification of the phase mismatch and of a spectral profile of the output beam and/or a modification of a relative orientation of a polarisation vector of the input beam with respect to a wavelength conversion axis.

5. The device according to any of claims 1 to 4, **characterised in that** the optoelectronic means (MO) comprise a "frozen-wave" generator.

6. The device according to any of claims 1 to 5, **characterised in that** it comprises at least two nonlinear crystals (CN) that are placed one after the other.

7. The device according to any of claims 1 to 6, **characterised in that** the pulsed laser source (SL) is able to deliver primary photons having a primary wavelength and primary photons having another wavelength equal to a second harmonic of the primary wavelength, and **in that** the nonlinear crystal (CN) is what is called a "frequency doubler" at the primary wavelength

8. The device according to any of claims 1 to 7, **characterised in that** the nonlinear crystal (CN) comprises a doping with rare-earth ions allowing it to combine the generation of secondary photons with an amplification of primary photons and/or of secondary photons.

9. The device according to claim 8, **characterised in that** the laser source used has the capacity to generate primary photons allowing laser pumping of rare-earth-doped crystals.

10. The device according to any of claims 1 to 9, **characterised in that** the nonlinear crystal (CN) possesses a nonlinearity of the second and/or third order.

11. The device according to any of claims 1 to 10, **characterised in that** the nonlinear crystal is a transparent ceramic and/or transparent glass-ceramic.

12. The device according to any of claims 1 to 11, **characterised in that** the nonlinear crystal has a centrosymmetric molecular arrangement.

13. The device according to any of claims 1 to 12, **characterised in that** the nonlinear crystal is doped with ions of ytterbium, erbium, thulium, holmium, neodymium, praseodymium, or cerium, used alone or in combination.

14. A sample-analysing system, **characterised in that** it comprises at least one generating device (DG) according to any of the preceding claims, that is able to deliver a polychromatic output beam for analysing the sample.

15. The system according to claim 14, **characterised in that** it is able to perform an analysis of the sample by multiplex coherent anti-Stokes Raman scattering.
